Europäisches Patentamt

European Patent Office

Office européen des brevets

(19)

(11) Veröffentlichungsnummer: **0 147 736**
**B1**

(12) # EUROPÄISCHE PATENTSCHRIFT

(45) Veröffentlichungstag der Patentschrift:
**14.09.88**

(51) Int. Cl.⁴: **B 29 C 47/62,** B 29 C 47/78

(21) Anmeldenummer: **84115360.4**

(22) Anmeldetag: **13.12.84**

(54) **Gehäuseabschnitt für eine Doppelschneckenwellenmaschine.**

(30) Priorität: **30.12.83 DE 3347537**

(43) Veröffentlichungstag der Anmeldung:
**10.07.85 Patentblatt 85/28**

(45) Bekanntmachung des Hinweises auf die Patenterteilung:
**14.09.88 Patentblatt 88/37**

(84) Benannte Vertragsstaaten:
**CH DE LI**

(56) Entgegenhaltungen:
**EP - A - 0 006 489**
**US - A - 4 385 876**

(73) Patentinhaber: **Blach, Josef A., Wilhelmstrasse 24,
D-7144 Asperg (DE)**

(72) Erfinder: **Blach, Josef A., Wilhelmstrasse 24,
D-7144 Asperg (DE)**

(74) Vertreter: **Hoeger, Stellrecht & Partner,
Uhlandstrasse 14c, D-7000 Stuttgart 1 (DE)**

## Beschreibung

Die Erfindung bezieht sich auf einen Gehäuseabschnitt für eine Doppelschneckenwellenmaschine mit den Merkmalen des Überbegriffs des Patentanspruchs 1. Derartige Gehäuseabschnitte sind in der DE-C-24 23 785 beschrieben. Das Gehäuse eines Extruders oder einer anderen Maschine mit mehreren zusammenwirkenden Schneckenwellen wird in den in Wellenlängsrichtung hintereinanderliegenden Bereichen außerordentlich unterschiedlichen Belastungen mechanischer und chemischer Art ausgesetzt – man denke nur an das Einmischen von Glasfasern in einen zuvor in der Maschine aufgeschmolzenen Kunststoff, so daß der mechanische Verschleiß des die Schneckenwellen aufnehmenden Gehäusehohlraums an derjenigen Stelle sprunghaft zunimmt, an der die Glasfasern zugegeben werden. Um der unterschiedlichen Beanspruchung und dem sich längs der Schneckenwellen ändernden Verschleiß des Maschinengehäuses Rechnung zu tragen, ist es üblich, das letztere quer zur Längsrichtung zu teilen, d.h. das Gehäuse aus mehreren Gehäuseschüssen, im folgenden Gehäuseabschnitte genannt, zusammenzusetzen, wobei die letzteren ein in Längsrichtung geteiltes, tragendes Außengehäuse sowie ein als Verschleißeinsatz ausgebildetes, die Schneckenwellen aufnehmendes Innengehäuse aufweisen.

Wie sich z.B. der Figur 7 der DE-PS 24 23 785 entnehmen läßt, ist man bestrebt, das aus verhältnismäßig teuren Werkstoffen hergestellte Innengehäuse möglichst dünnwandig auszubilden und dem Außengehäuse die Aufgabe zu übertragen, zumindest im wesentlichen die mechanische Stabilität des Maschinengehäuses zu gewährleisten. Bei dieser bekannten Konstruktion ist der Außenquerschnitt des Innengehäuses und der Innenquerschnitt des Außengehäuses oval, und das Außengehäuse ist in Längsrichtung in der Mitte horizontal geteilt, wobei Ober- und Unterteil des Außengehäuses durch Zugankerschrauben gegeneinander und gegen das Innengehäuse gepreßt werden. Nicht nur wegen der erforderlichen mechanischen Abstützung des Innengehäuses durch das Außengehäuse, sondern auch wegen der Notwendigkeit, einen guten Wärmeübergang vom Innen- auf das Außengehäuse bzw. umgekehrt zu gewährleisten – Heiz- oder Kühlelemente zum Temperieren des durch die Schneckenwellen zu bearbeitenden Materials befinden sich im Außengehäuse –, wird angestrebt, daß beim Anziehen der Außengehäuseteile gegeneinander und gegen das Innengehäuse sich überall eine gleichmäßig gute Anpressung des Außengehäuses gegen das Innengehäuse ergibt. Dies läßt sich aber bei horizontaler Teilung des Außengehäuses und ovalem Außenquerschnitt des Innengehäuses nicht erreichen, ganz abgesehen davon, daß sich ovale Querschnitte nur schlecht mit der gewünschten Genauigkeit bearbeiten lassen. Bei einer Ausführungsform gemäß Fig. 1 der DE-PS 2 423 785 ergibt sich zwar infolge eines von Kreisbögen begrenzten Außenquerschnitts des Innengehäuses eine überall gute Anpressung des horizontal geteilten Außengehäuses an das Innengehäuse, jedoch bedingt dieser Außenquerschnitt des Innengehäuses höchst unterschiedliche Wandstärken des Innengehäuses mit entsprechend ungleichmäßigem Temperaturgefälle zur Wand des Gehäusehohlraums sowie viel Zerspanungsarbeit bei der Bearbeitung des Innengehäuses, was angesichts der teuren und oft schlecht bearbeitbaren Werkstoffe für dieses Bauteil besonders nachteilig ist.

Ähnliches gilt für eine andere bekannte Konstruktion (DE-OS 30 23 393) mit einem kreiszylindrischen Außengehäuse, in das ein als Verschleißeinsatz ausgebildetes Innengehäuse mit entsprechend einem Kreiszylinder ausgebildeten, konvexen Seitenflächen eingesetzt ist.

Der Erfindung lag die Aufgabe zugrunde, einen Gehäuseabschnitt für eine Doppelschneckenwellenmaschine mit einem in Längsrichtung geteilten, tragenden Außengehäuse mit im wesentlichen rechteckigem Außenquerschnitt, welches ein als Verschleißeinsatz ausgebildetes, zwei zueinander parallele, sich überlappende Längsbohrungen aufweisendes Innengehäuse eng anliegend umschließt und mittels die Teilungsfugen durchsetzender Spannschrauben gegen das Innengehäuse anziehbar ist, so auszubilden, daß sich ein optimaler Kompromiß zwischen folgenden Forderungen ergibt: Möglichst geringe Maße des Verschleißeinsatzes im Hinblick auf die hierfür erforderlichen teuren Werkstoffe, gute Herstellbarkeit des Außenquerschnitts des Verschleißeinsatzes bzw. des Innenquerschnitts des Außengehäuses auf einfachen Maschinen mit dennoch hoher Genauigkeit, gleichmässig gute Flächenpressung zwischen Außen- und Innengehäuse nach dem Anziehen der Außengehäuseteile gegeneinander und gegen das Innengehäuse. Diese Aufgabe läßt sich erfindungsgemäß dadurch lösen, daß der Außenquerschnitt des Innengehäuses und der Innenquerschnitt des Außengehäuses im wesentlichen rechteckig sind, daß das Außengehäuse längs zweier einander diagonal gegenüberliegenden Längskanten des Innengehäuses geteilt ist und daß eine das Außengehäuse umfassende längsgeteilte Heizvorrichtung vorgesehen ist. Wenn letztere gleichfalls längs zweier einander diagonal gegenüberliegenden Längskanten des Außengehäuses geteilt ist, ergibt sich eine besonders einfach zu montierende Heizvorrichtung mit guter Flächenpressung zwischen Heizvorrichtung und Außengehäuse.

Aus der vorstehenden Diskussion ergibt sich, daß unter einem Gehäuseabschnitt ein Längsabschnitt des Maschinengehäuses zu verstehen ist, daß die Teilungsfugen des Außengehäuses und der Heizvorrichtung in Gehäuselängsrichtung verlaufen und daß das Innengehäuse vom Außengehäuse sowie das letztere von der Heizvorrichtung nur am Umfang, nicht aber an seinen Stirnseiten umschlossen wird.

Innengehäuse aus besonders verschleißfesten Werkstoffen lassen sich an ihren Längsbohrungen entweder überhaupt nicht oder nur über kurze Längen bearbeiten (z.B. durch Drahterodieren); für relativ lange Gehäuseabschnitte kommen derartige Werkstoffe daher nicht in Frage. Gleiches gilt für die Endbearbeitung des Innengehäuses nach dem Härten. Da die Verschleißeinsätze außerdem dazu neigen, sich beim Härten und/oder beim Aufbringen einer möglichst verschleißfesten Schicht durch Auftragsschweißen auf die Längsbohrungsflächen zu verziehen, ist bei einer bevorzugten Ausführungsform des erfindungsgemäßen Gehäuseabschnitts das Innengehäuse quer zur Längsrichtung mindestens noch einmal geteilt, d.h. das Außengehäuse eines Gehäuseabschnitts nimmt mehrere hintereinanderliegende Innengehäuseteile auf, und einander benachbarte Stirnflächen der Innengehäuseteile werden dadurch gegeneinandergepreßt, daß in mindestens zwei einander gegenüberliegenden Außenseiten der Innengehäuseteile, den Stirnflächen benachbart, Ausnehmungen für den Eingriff der Enden flacher, die Teilungsfuge überbrückender Klammern vorgesehen sind, deren Enden bei abgenommenem Außengehäuse aus den Ausnehmungen herausfedern und beim Anziehen der Außengehäuseteile gegen das Innengehäuse derart in die Ausnehmungen gedrückt werden, daß die Klammern Längszuganker bilden. Die Ausnehmungen an den Innengehäuseteilen und die Enden der Klammern sind also so ausgebildet und aufeinander abgestimmt, daß beim Hineinpressen der Klammerenden in die Ausnehmungen beim Anziehen der Außengehäuseteile gegen das Innengehäuse in Gehäuselängsrichtung gerichtete Spannkräfte entstehen, die die Innengehäuseteile mit ihren Stirnflächen gegeneinander pressen. Derartige Mittel zum Gegeneinanderpressen der Innengehäuseteile sind natürlich viel billiger als beispielsweise Flansche an den Stirnenden der Innengehäuseteile, so daß sich ohne nennenswerte Kostenerhöhung verhältnismäßig kurze Innengehäuseteile schaffen lassen, die billiger herstellbar sind als längere Verschleißeinsätze und weniger zum Verziehen neigen. Außerdem behindern derartige Klammern das Anbringen der äußeren Heizvorrichtung nicht, während im Bereich von Flanschen der Gehäuseabschnitt durch äußere Heizvorrichtungen nicht beheizt werden kann. An dieser Stelle sei noch angemerkt, daß die Verschleißeinsätze bzw. Innengehäuse üblicherweise aus durchhärtbaren Stählen wie beispielsweise Chromstählen hergestellt werden. Es liegt im übrigen auf der Hand, daß sich derartige Klammerverbindungen nur bei im Querschnitt rechteckigen Innengehäusen anwenden lassen, nicht aber bei im Querschnitt runden oder ovalen Verschleißeinsätzen.

Bei der erfindungsgemäßen Konstruktion empfiehlt es sich, das Innengehäuse im Bereich seiner Ecken mit Längsbohrungen zur Aufnahme von Paßstiften zu versehen, was jedoch angesichts des genauen Anliegens des Außengehäuses am Innengehäuse keinen Mehraufwand zur Folge hat, da man dann Paßstifte zwischen den Abschnitten des Außengehäuses einsparen kann.

Zur Herabsetzung der Herstellungskosten trägt auch bei, wenn in die Innenflächen des Außengehäuses Nuten eingearbeitet werden, die Kanäle zur Temperierung (insbesondere Kühlung) des Innengehäuses bilden, und da das Außengehäuse vorzugsweise als Gußteil ausgebildet wird, kann man diese Nuten direkt in das Außengehäuse eingießen. Auf diese Weise wird nicht nur erreicht, daß die der Temperierung des Innengehäuses dienenden Kanäle möglichst nahe am Innengehäuse liegen, so daß sich ein guter Wärmeübergang ergibt, sondern man kann die Innengehäuse auch im Bereich der Flansche der Außengehäuse besser kühlen, als dies bei Konstruktionen der Fall ist, bei denen eine Temperiervorrichtung nur zwischen den Flanschen der Außengehäuse liegt und die letzteren umgibt. Zwar ist es schon bekannt, in das Außengehäuse, dem Verschleißeinsatz benachbart, Bohrungen zum Heizen bzw. Kühlen des Innengehäuses einzuarbeiten, derartige Bohrungen sind jedoch in der Herstellung aufwendiger als Nuten, und außerdem ist ihr Abstand vom Innengehäuse allemal noch größer als derjenige, den bei der bevorzugten Ausführungsform der erfindungsgemäßen Konstruktion die von den Nuten gebildeten Kanäle vom Innengehäuse aufweisen. Weitere vorteilhafte Ausgestaltungen der Erfindung ergeben sich aus den weiteren Ansprüchen. Die nachfolgende Beschreibung sowie die beigefügte zeichnerische Darstellung zeigen eine bevorzugte Ausführungsform eines erfindungsgemäßen Gehäuseabschnitts; in der beigefügten Zeichnung zeigen:

Figur 1 einen Schnitt durch den Gehäuseabschnitt senkrecht zur Längsrichtung des Maschinengehäuses;

Figur 2 einen Längsschnitt durch den Gehäuseabschnitt entsprechend der Linie 2–2 in Figur 1, jedoch ohne Heizvorrichtung, und

Figur 3 eine etwas vereinfachte Ansicht des Gehäuseabschnitts, gleichfalls ohne Heizvorrichtung, gesehen in Richtung des Pfeils A aus Fig. 1, wobei die letztere einen Schnitt nach der Linie 1–1 in Figur 3 darstellt.

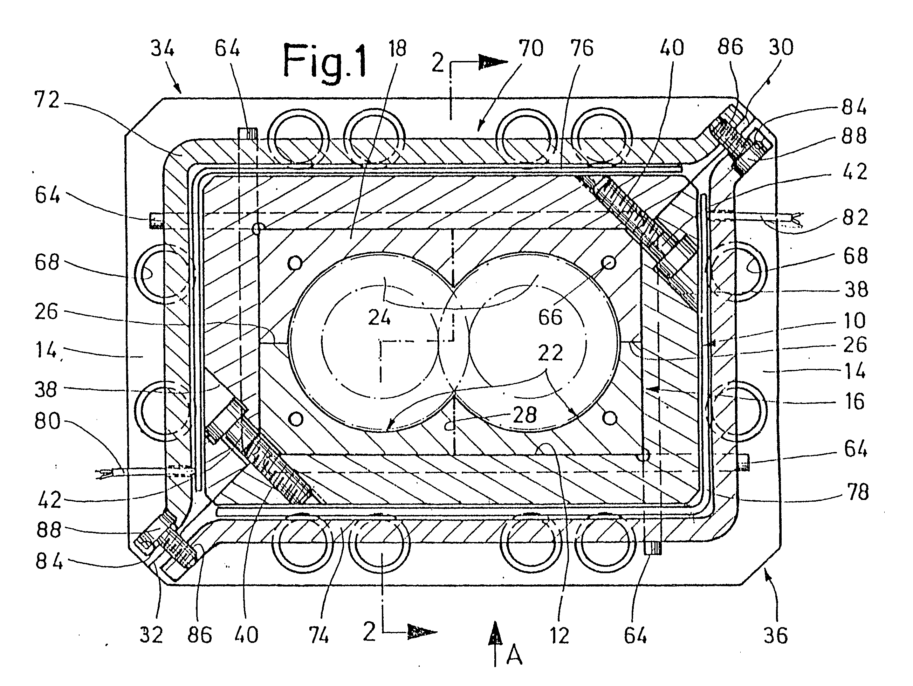

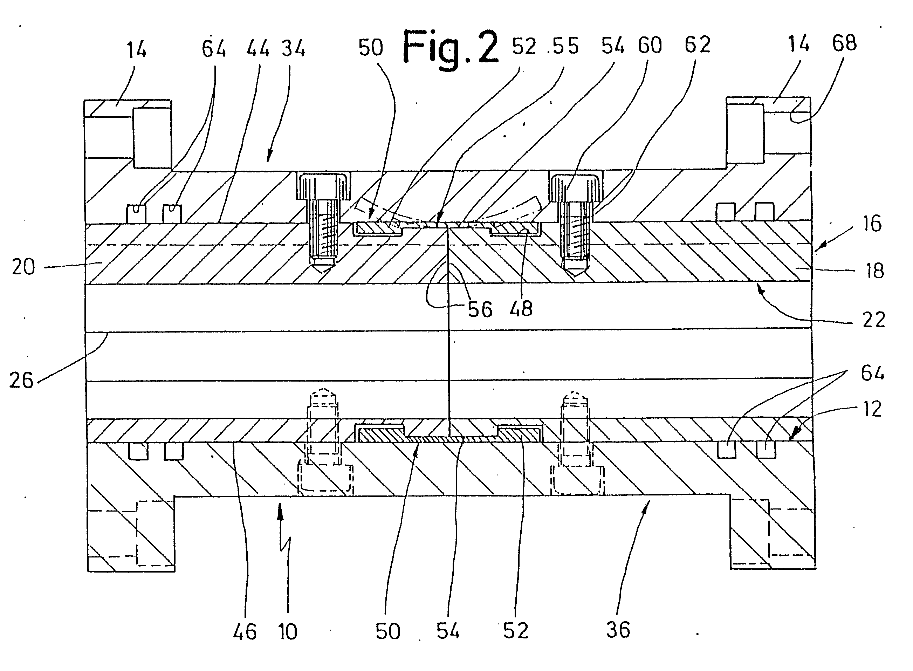

Die Figuren 1 und 2 zeigen ein Außengehäuse 10 des Gehäuseabschnitts, welches eine durchgehende, im Querschnitt rechteckige Längsöffnung 12 und an seinen Enden jeweils einen Flansch 14 aufweist, über den der dargestellte Gehäuseabschnitt mit einem in Längsrichtung benachbarten Gehäuseabschnitt verschraubt wird. In die Längsöffnung 12 ist ein als Ganzes mit 16 bezeichnetes Innengehäuse eingesetzt, welches aus zwei hintereinanderliegenden Teilen 18 und 20 besteht und zwei einander seitlich überlappende Längsbohrungen 22 aufweist, die zwei miteinander kämmende, in Figur 1 strichpunktiert dargestellte Schneckenwellen 24 aufnehmen.

Erfindungsgemäß können die Innengehäuseteile 18, 20 längs einer Teilungsfuge 26 in Längsrichtung horizontal geteilt sein, und außerdem kann es im Hinblick auf die Bearbeitung der Innengehäuseteile von Vorteil sein, Schweißnähte 28 vorzusehen, die an die Stelle der Teilungsfuge 26 treten oder zusätzlich zu dieser vorgesehen sein können.

Wie die Figur 1 erkennen läßt, ist auch das Außengehäuse 10 in Längsrichtung geteilt, und zwar längs Teilungsfugen 30 und 32, die bezüglich der Querschnitte des Außengehäuses 10 und des Innengehäuses 16 ungefähr diagonal verlaufen. Die so entstehenden Außengehäuseteile 34 und 36 haben also erfindungsgemäß einen winkelförmigen Querschnitt. Jedes Außengehäuseteil besitzt abgestufte Bohrungen 38 sowie Gewindebohrungen 40 für Spannschrauben 42, mit deren Hilfe die Außengehäuseteile gegeneinander und gegen das Innengehäuse festgezogen werden. Da erfindungsgemäß die Außengehäuseteile 34, 36 winkelförmig verlaufende Innenflächen aufweisen und die Teilungsfugen 30, 32 ungefähr diagonal, d.h. nicht parallel zu einer der Seitenflächen des Innengehäuses, verlaufen, läßt sich mit den gleichfalls schräg verlaufenden Spannschrauben 42 eine überall gute Anlage der Außengehäuseteile am Innengehäuse erzielen.

Die Innengehäuseteile 18, 20 weisen mindestens im Bereich der einander zugekehrten Enden an zwei einander gegenüberliegenden Seitenflächen 44, 46 quer verlaufende Nuten 48 auf, in die Klammern 50 mit ihren von quer verlaufenden Rippen 52 gebildeten Enden eingreifen, wenn die Außengehäuseteile 34, 36 gegeneinander festgezogen sind. Die Rippen 52 sind durch einen blattfederartigen Steg 54 miteinander verbunden, der bei loser Klammer die in Figur 2 oben strichpunktiert dargestellte Form aufweist und im montierten Zustand des Gehäuses von Aussparungen 55 der Innengehäuseteile 18, 20 aufgenommen wird. Ferner sind die Rippen 52 und die Nuten 48 hinsichtlich ihrer Formen und ihres Abstands so aufeinander abgestimmt, daß die Stirnflächen 56 der Innengehäuseteile 18, 20 gegeneinanderpressende Längskräfte entstehen, wenn die Rippen 52 beim Anziehen der Außengehäuseteile 34, 36 in die Nuten 48 gedrückt werden. Zu diesem Zweck wäre es z.B. denkbar, die Rippen an ihren einander zugewandten Längskanten mit Schrägflächen zu versehen.

Schließlich sind die Innengehäuseteile 18, 20 durch Schrauben 60 in den Außengehäuseteilen 34, 36 in axialer Richtung gesichert, wobei diese Schrauben mit Spiel in Bohrungen 62 der Außengehäuseteile sitzen.

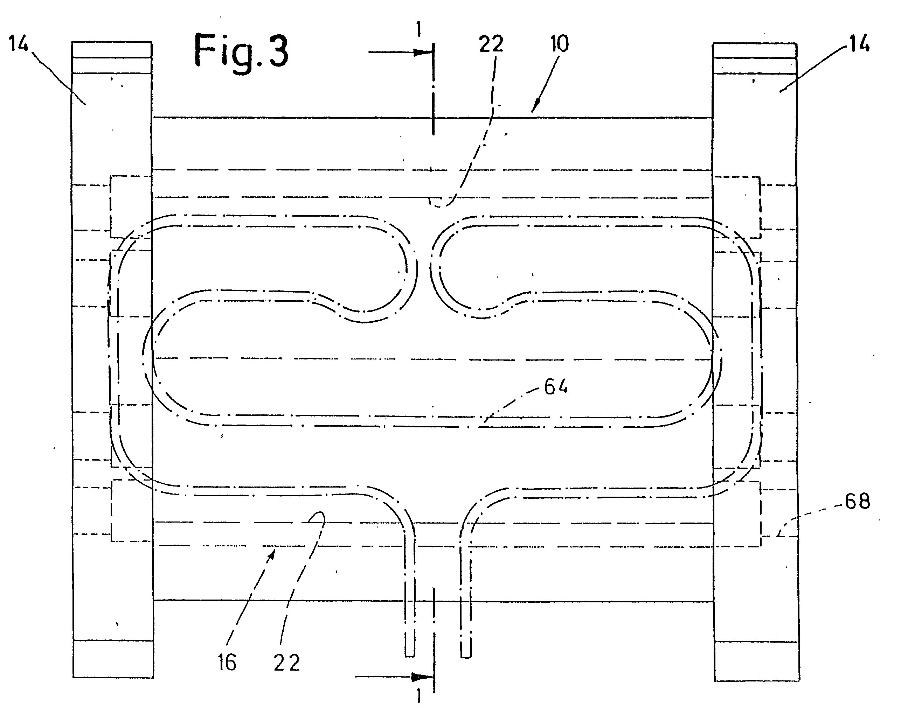

Wie die Figuren 1 und 2 erkennen lassen, sind in die Flächen der Längsöffnung 12 des Außengehäuses 10 Nuten 64 für Heiz- und/oder Kühlelemente eingegossen, wobei sich aus Figur 3 ergibt, daß diese Nuten ein nahezu geschlossenes Rechteck bilden, welches Platz für die Klammern 50 lässt und sich bis unter die Flansche 14 erstreckt.

Schließlich weisen das Innengehäuse 16 Paßstiftbohrungen 66 und die Flansche 14 des Außengehäuses Schraubenbohrungen 68 zum axialen Verschrauben der Gehäuseabschnitte auf.

Erfindungsgemäß besitzt das Innengehäuse 16 an seinen Breit- und seinen Schmalseiten eine ungefähr gleich große Minimalwandstärke.

Eine ebenso wie das Außengehäuse 10 ungefähr diagonal geteilte Heizvorrichtung 70 besteht aus zwei im Querschnitt winkelförmigen Mantelteilen 72 und 74 sowie elektrischen Plattenheizkörpern 76, 78, deren Anschlußdrähte mit 80, 82 bezeichnet worden sind. Jedes Mantelteil besitzt abgestufte Bohrungen 84 und Gewindebohrungen 86 für Spannschrauben 88, mit deren Hilfe die Mantelteile gegeneinander und gegen das Außengehäuse 10 bzw. die Plattenheizkörper 76, 78 festgezogen werden.

## Patentansprüche

1. Gehäuseabschnitt für eine Doppelschneckenwellenmaschine mit einem in Längsrichtung geteilten, tragenden Außengehäuse (10) mit im wesentlichen rechteckigem Außenquerschnitt, welches ein als Verschleißeinsatz ausgebildetes, zwei zueinander parallele, sich überlappende Längsbohrungen (22) aufweisendes Innengehäuse (16) eng anliegend umschließt und gegen das Innengehäuse anziehbar ist, dadurch gekennzeichnet, daß der Außenquerschnitt des Innengehäuses (16) und der Innenquerschnitt des Außengehäuses (10) im wesentlichen rechteckig sind, daß das Außengehäuse längs zweier einander diagonal gegenüberliegenden Längskanten des Innengehäuses geteilt ist (bei 30, 32) und daß eine das Außengehäuse (10) umfassende, längsgeteilte Heizvorrichtung (70) vorgesehen ist.

2. Gehäuseabschnitt nach Anspruch 1, dadurch gekennzeichnet, daß das Innengehäuse (16) quer zur Längsrichtung geteilt (bei 56) ist und einander benachbarte Stirnflächen (56) der Innengehäuseteile (18, 20) dadurch gegeneinandergepreßt sind, daß in mindestens zwei einander gegenüberliegenden Außenseiten (44, 46) der Innengehäuseteile, den Stirnflächen (56) benachbart, Ausnehmungen (48) für den Eingriff der Enden (52) flacher, die Teilungsfuge (56) überbrückender Klammern (50) vorgesehen sind, deren Enden (52) bei abgenommenem Außengehäuse (10) aus den Ausnehmungen (48) herausfedern und beim Anziehen der Außengehäuseteile (34, 36) gegen das Innengehäuse (16) derart in die Ausnehmungen gedrückt werden, daß die Klammern Längszuganker bilden.

3. Gehäuseabschnitt nach Anspruch 2, dadurch gekennzeichnet, daß jede Klammer (50) zwei quer zur Gehäuselängsrichtung verlaufende Rippen (52) für den Eingriff in die als quer verlaufende Nuten (48) ausgebildeten Ausnehmungen der Innengehäuseteile (18, 20) sowie einen die Rippen verbindenden, blattfederartigen Steg (54) aufweist.

4. Gehäuseabschnitt nach Anspruch 3, dadurch gekennzeichnet, daß die Innengehäuseteile (18, 20) Aussparungen (55) zur Aufnahme der Klammerstege (54) aufweisen.

5. Gehäuseabschnitt nach einem oder mehreren der vorstehenden Ansprüche, dadurch gekenzeichnet, daß das Innengehäuse (16) im Bereich seiner Ecken mit Längsbohrungen (66) zur Aufnahme von Paßstiften versehen ist.

6. Gehäuseabschnitt nach einem oder mehreren der vorstehenden Ansprüche, dessen Außengehäuse, dem Innengehäuse benachbart, Kanäle zur Temperierung des Innengehäuses aufweist, dadurch gekennzeichnet, daß die Innenflächen (12) des Außengehäuses (10) die Kanäle bildenden Nuten (64) aufweisen.

7. Gehäuseabschnitt nach Anspruch 6, dadurch gekennzeichnet, daß die Außengehäuseteile (34, 36) als Gußteile ausgebildet und die Nuten (64) eingegossen sind.

8. Gehäuseabschnitt nach Anspruch 6 oder 7, dessen Außengehäuse an den Enden mit Verbindungsflanschen versehen ist, dadurch gekennzeichnet, daß sich die Nuten (64) bis in die Flanschbereiche der Außengehäuseteile (34, 36) erstrecken.

9. Gehäuseabschnitt nach einem der Ansprüche 1 bis 8, dadurch gekennzeichnet, daß die Heizvorrichtung (70) längs zweier einander diagonal gegenüberliegenden Längskanten des Außengehäuses geteilt ist.

## Claims

1. Section of housing for a double screw shaft machine, comprising a load-bearing outer housing (10) divided in the longitudinal direction and having a substantially rectangular outer cross section, said outer housing enclosing an inner housing (16) in closely fitting relationship and being adapted to be tightened against said inner housing which is designed as an abrasion insert and has two overlapping longitudinal bores (22) parallel to one another, characterized in that the outer cross section of said inner housing (16) and the inner cross section of said outer housing (10) are substantially rectangular, that the outer housing is divided (at 30, 32) along two diagonally opposed longitudinal edges of the inner housing, and that a heating device (70) is provided, said heating device being divided in the longitudinal direction and encompassing the outer housing (10).

2. Section of housing as defined in claim 1, characterized in that the inner housing (16) is divided (at 56) transversely to the longitudinal direction and adjacent end faces (56) of the inner housing portions (18, 20) are pressed together in that recesses (48) are provided in at least two opposite outer faces (44, 46) of the inner housing portions, adjacent the end faces (56), for receiving the ends (52) of flat clips (50) bridging the interface (56), said ends (52) springing out of said recesses (48) when the outer housing (10) is removed and being pressed into the recesses when the outer housing portions (34, 36) are tightened against the inner housing (16) such that the clips form longitudinal tension elements.

3. Section of housing as defined in claim 2, characterized in that each clip (50) has two ribs (52) extending transversely to the longitudinal direction of the housing for engaging in the recesses of the inner housing portions (18, 20) designed as transversely extending grooves (48) and comprises a crosspiece (54) designed as a leaf spring and connecting the ribs.

4. Section of housing as defined in claim 3, characterized in that the inner housing portions (18, 20) include recesses (55) for accommodating the clip crosspieces (54).

5. Section of housing as defined in any or several of the preceding claims, characterized in that the inner housing (16) is provided in the region of its corners with longitudinal bores (66) for receiving set pins.

6. Section of housing as defined in any or several of the preceding claims, wherein the outer housing has, adjacent the inner housing, channels for regulating the temperature of the inner housing, characterized in that the inner faces (12) of the outer housing (10) have grooves (64) forming said channels.

7. Section of housing as defined in claim 6, characterized in that the outer housing portions (34, 36) are designed as cast parts and the grooves (64) are integrally cast.

8. Section of housing as defined in claims 6 or 7, wherein the outer housing is provided at its ends with connecting flanges, characterized in that the grooves (64) extend into the flange regions of the outer housing portions (34, 36).

9. Section of housing as defined in any of claims 1 to 8, characterized in that the heating device (70) is divided along two diagonally opposed longitudinal edges of the outer housing.

## Revendications

1. Section de boîtier pour boudineuse à deux vis comportant un boîtier extérieur (10) portant divisé dans le sens longitudinal et ayant une section transversale extérieure substantiellement rectangulaire, lequel boîtier extérieur adhère uniformément à un boîtier intérieur (16) formé comme pièce d'usure et comportant deux alésages (22) longitudinaux qui sont parallèles l'une par rapport à l'autre et qui se couvrent, lequel boîtier extérieur peut être serré contre le boîtier intérieur, caractérisée en ce que la section transversale extérieure du boîtier intérieur (16) et la section transversale intérieure du boîtier extérieur (10) sont substantiellement rectangulaires, que le boîtier extérieur est divisé (à 30, 32) le long de deux arêtes longitudinales du boîtier intérieur, qui sont en diagonale l'une en face de l'autre, et qu'il est prévu un dispositif de chauffage (70) divisé dans le sens de la longueur et englobant le boîtier extérieur (10), lequel dispositif de chauffage est divisé le long de deux arêtes longitudinales du boîtier extérieur et qui sont également en diagonale l'une en face de l'autre.

2. Section de boîtier selon la revendication 1, caractérisée en ce que le boîtier intérieur (16) est divisé en transversale à la direction longitudinale (en 56) et en ce que des surfaces de front (56) des parts (18, 20) du boîtier intérieur, qui sont voisines l'une de l'autre sont serrées l'une contre l'autre, et en ce que des entailles sont prévues dans au moins deux faces extérieures (44, 46) des parts du boîtier intérieur et qui sont en face l'une de l'autre, lesquelles entailles (48) sont voisines des surfaces de front (56) et sont agencées pour recevoir des extrémités (52) des brides de fixation plates (50) qui enjambent les rainures de sections (56), et dont les extrémités (56) ressortent des entailles (48) lorsque le boîtier extérieur a été enlevé, et qui, lors d'un reserrage des parts du boîtier extérieur (34, 36) contre le boîtier intérieur (16), sont serrées de telle sorte dans les entailles, que les brides de fixation forment un tirant latéral.

3. Section de boîtier selon la revendication 2, caractérisée en ce que chaque bride de fixation (50) comporte deux nervures (52) qui s'étendent transversalement à la direction longitudinale du boîtier et qui servent à l'en prise dans les entailles des parts du boîtier intérieur (18, 20) lesquelles entailles sont formées de rainures s'étendant en travers, ainsi qu'une barrette d'attache (54), semblable à un ressort à lames, reliant les nervures.

4. Section de boîtier selon la revendication 3, caractérisée en ce que les parts du boîtier intérieur (18, 20) comportent des entailles (55) pour recevoir les barrettes d'attache (54).

5. Section de boîtier selon une ou plusieurs des revendications précédentes, caractérisée en ce que le boîtier intérieur (16) est pourvu aux alentours de ses coins d'alésages longitudinaux (66) pour recevoir des goujons d'assemblage.

6. Section de boîtier selon une ou plusieurs des revendications précédentes, où le boîtier extérieur comporte au voisinage du boîtier intérieur des canaux pour tempérer le boîtier intérieur, caractérisée en ce que les surfaces intérieures (12) du boîtier extérieur (10) comportent des rainures (64) formant les canaux.

7. Section de boîtier selon la revendication 6, caractérisée en ce que les parties du boîtier extérieur (34, 36) sont formées de parties coulées et les rainures (4) sont coulées dedans.

8. Section de boîtier selon la revendication 6 ou 7, où les extrémités du boîtier extérieur sont pourvus des brides de liaison, caractérisée en ce que les rainures (4) s'étendent jusque dans les portées des brides des parts du boîtier extérieur (34, 36).

9. Section de boîtier selon l'une des revendications 1 à 8, caractérisée en ce que le dispositif de chauffage (70) est divisé selon deux arêtes longitudinales du boîtier extérieur opposées en diagonale l'une face à l'autre.

Fig.1

Fig.2

Fig.3